# EUROPEAN PATENT APPLICATION

(11) **EP 4 351 261 A1**
(43) Date of publication of application: **10.04.2024**
(21) Application number: 22811607.5
(22) Date of filing: 24.05.2022
(51) Int. Cl.: H04W 74/08, H04W 72/04, H04W 28/04, H04W 84/12

(54) **METHOD AND DEVICE FOR DIRECT COMMUNICATION IN WIRELESS LAN**

(30) Priority: 25.05.2021 KR 20210066856; 20.05.2022 KR 20220061886
(71) Applicant: Electronics and Telecommunications Research Institute, Daejeon 34129 (KR)
(72) Inventor: HWANG, Sung Hyun, Daejeon 34129 (KR); KANG, Kyu Min, Daejeon 34129 (KR); PARK, Jae Cheol, Daejeon 34129 (KR); OH, Jin Hyung, Daejeon 34129 (KR); LIM, Dong Woo, Daejeon 34129 (KR); CHOI, Su Na, Daejeon 34129 (KR); KIM, Yong Ho, Incheon 21562 (KR)
(74) Representative: Betten & Resch
(86) International application number: PCT/KR2022/007345
(87) International publication number: WO 2022/250414

(57) **Abstract**

A method and a device for shard communication in a wireless LAN are disclosed. A method of a first STA comprises the steps of: receiving a first frame for allocation of a shared communication period from an AP; identifying the shared communication period on the basis of one or more fields included in the first frame; and performing shared communication with a second STA in the shared communication period, wherein the shared communication period is configured within a TXOP configured between the AP and a third STA.

## Description

### [Technical Field]

The present disclosure relates to a wireless local area network (LAN) communication technique, and more specifically, to a technique for direct communication between stations.

### [Background Art]

Recently, as the spread of mobile devices expands, a wireless local area network technology capable of providing fast wireless communication services to mobile devices is in the spotlight. The wireless LAN technology may be a technology that supports mobile devices such as smart phones, smart pads, laptop computers, portable multimedia players, embedded devices, and the like to wirelessly access the Internet based on wireless communication technology.

The wireless LAN technology is being standardized as IEEE802.11 standards mainly in the Institute of Electrical and Electronics Engineers (IEEE). The initial version of the IEEE 802.11 standard can support a communication speed of 1 to 2 megabits per second (Mbps). Thereafter, the IEEE 802.11n standard and IEEE 802.11ac standard supporting a wide channel bandwidth and improved throughput, and the IEEE 802.11ax standard supporting improved frequency efficiency in a dense environment were developed.

As applications requiring higher throughput and applications requiring real-time transmissions occur, the IEEE 802.11be standard that is an Extreme High Throughput (EHT) wireless LAN technology is being developed. The objective of the IEEE 802.11be standard may be to support a high throughput of 30 Gbps. The IEEE 802.11be standard can support a technology for reducing transmission delay. In addition, the IEEE 8021.1 The standard may support a further extended frequency bandwidth (e.g., 320MHz bandwidth), multi-link transmission and aggregation operations including operations using multi-bands, transmission operations of a multi-access point (AP), and/or efficient retransmission operations (e.g., hybrid automatic repeat request (HARQ) operations).

In a communication system supporting multiple links, it is necessary to define detailed operations. In particular, when direct communication between stations is initiated by an access point, the direct communication may be controlled by the access point. When direct communication between stations fails, the corresponding station may not be able to resume the communication. Therefore, methods for resuming the communication in the above-described situation are needed.

Meanwhile, the prior arts of the present disclosure have been described to enhance understanding of the background of the present disclosure, and may include contents other than the prior arts already known to ordinary skilled persons in the field to which the present disclosure belongs.

### [Disclosure]

### [Technical Problem]

An objective of the present disclosure for solving the above-described problem is directed to providing a method and an apparatus for direct communication between stations in a wireless LAN.

### [Technical Solution]

An operation method of a first STA according to a first exemplary embodiment of the present disclosure for achieving the objective may comprise: receiving, from an access point (AP), a first frame for allocating a shared communication period; identifying the shared communication period based on one or more fields included in the first frame; and performing data transmission/reception without a channel contention procedure in the shared communication period, wherein the shared communication period is configured within a transmission opportunity (TXOP) configured by the AP.

The first frame may include a first field indicating that the shared communication period is allocated and a second field indicating a length of the shared communication period.

The method may further comprise transmitting, to the AP, a second frame that is a response to the first frame, wherein the first frame is a multi-user-request-to-send (MU-RTS) frame, and the second frame is a clear-to-send (CTS) frame.

The method may further comprise, when the first STA needs to terminate shared communication in the shared communication period before the shared communication period allocated by the AP ends, transmitting a third frame including information indicating termination of the shared communication period.

The information indicating termination of the shared communication period may be at least one of an RDG/More PPDU subfield set to 0 or a more data field set to 0 included in a medium access control (MAC) header of the third frame.

The third frame may be a quality of service (QoS) Null frame transmitted to the AP or a last data frame transmitted by the first STA in the shared communication period.

The performing of the data transmission/reception may comprise: transmitting a data frame; and when a reception response frame for the data frame is not received within a preset time, transmitting a third frame including information indicating termination of the shared communication period.

The performing of the data transmission/reception may comprise: transmitting a data frame; and when a reception response frame for the data frame is not received within a preset time, retransmitting the data frame.

An operation method of an access point (AP) according to a second exemplary embodiment of the present disclosure for achieving the objective may comprise: performing communication with a first station (STA) within a transmission opportunity (TXOP); configuring a shared communication period within the TXOP; and transmitting a first frame for allocating the shared communication period to a second STA, wherein shared communication between the second STA and a third STA is performed in the shared communication period.

The first frame may include a first field indicating that the shared communication period is allocated and a second field indicating a length of the shared communication period.

The method may further comprise receiving, from the second STA, a second frame that is a response to the first frame, wherein the first frame is a multi-user-request-to-send (MU-RTS) frame, and the second frame is a clear-to-send (CTS) frame.

The method may further comprise: obtaining, from the second STA, a third frame including information indicating termination of the shared communication period; and after termination of the shared communication period, performing communication with the first STA in the TXOP.

The information indicating termination of the shared communication period may be at least one of an RDG/More PPDU subfield set to 0 or a more data field set to 0 included in a medium access control (MAC) header of the third frame.

The third frame may be a quality of service (QoS) Null frame transmitted to the AP or a last data frame transmitted by the second STA in the shared communication period.

The method may further comprise: identifying a data frame transmitted by the second STA to the third STA in the shared communication period; identifying transmission of a reception response frame for the data frame in the shared communication period; and when the shared communication is not performed between the second STA and the third STA within a preset time after the transmission of the reception response frame, determining that the shared communication period is terminated.

The method may further comprise: identifying a data frame transmitted by the second STA to the third STA in the shared communication period; and when a reception response frame for the data frame is not identified within a preset time in the shared communication period, determining that the shared communication period is terminated.

A first STA according to a third exemplary embodiment of the present disclosure for achieving the objective may comprise: a processor; a memory electronically communicating with the processor; and one or more instructions stored in the memory, wherein the one or more instructions may cause the first STA to: receive, from an access point (AP), a first frame for allocating a shared communication period; identify the shared communication period based on one or more fields included in the first frame; and perform data transmission/reception without a channel contention procedure in the shared communication period, wherein the shared communication period is configured within a transmission opportunity (TXOP) configured by the AP.

The one or more instructions may cause the first STA to transmit, to the AP, a second frame that is a response to the first frame, wherein the first frame is a multi-user-request-to-send (MU-RTS) frame, the second frame is a clear-to-send (CTS) frame, and the MU-RTS frame includes a first field indicating that the shared communication period is allocated and a second field indicating a length of the shared communication period.

The one or more instructions may cause the first STA to: when the first STA needs to terminate shared communication in the shared communication period before the shared communication period allocated by the AP ends, transmit a third frame including information indicating termination of the shared communication period, wherein the third frame is a quality of service (QoS) Null frame transmitted to the AP or a last data frame transmitted by the first STA in the shared communication period.

The one or more instructions may cause the first STA to: transmit a data frame; and when a reception response frame for the data frame is not received within a preset time, transmit a third frame including information indicating termination of the shared communication period.

### [Advantageous Effects]

According to the present disclosure, the access point may configure a period for direct communication between stations to the stations. The stations may perform direct communication in the period configured by the access point. When the direct communication between the stations fails, the access point may resume and/or terminate the communication (e.g., direct communication) by controlling the direct communication. Accordingly, the direct communication between the stations can be efficiently performed.

### [Description of Drawings]

FIG. 1 is a block diagram illustrating a first exemplary embodiment of a communication node constituting a wireless LAN system.
FIG. 2 is a conceptual diagram illustrating a first exemplary embodiment of multi-links configured between MLDs.
FIG. 3 is a conceptual diagram illustrating a first exemplary embodiment of a method for direct communication between STAs.
FIG. 4 is a conceptual diagram illustrating a second exemplary embodiment of a method for direct communication between STAs.
FIG. 5 is a conceptual diagram illustrating a third exemplary embodiment of a method for direct communication between STAs.
FIG. 6 is a conceptual diagram illustrating a fourth exemplary embodiment of a method for direct communication between STAs.
FIG. 7 is a conceptual diagram illustrating a fifth exemplary embodiment of a method for direct communication between STAs.
FIG. 8 is a conceptual diagram illustrating a sixth exemplary embodiment of a method for direct communication between STAs.
FIG. 9 is a conceptual diagram illustrating a seventh exemplary embodiment of a method for direct communication between STAs.
FIG. 10 is a conceptual diagram illustrating an eighth exemplary embodiment of a method for direct communication between STAs.
FIG. 11 is a conceptual diagram illustrating a ninth exemplary embodiment of a method for direct communication between STAs.
FIG. 12 is a conceptual diagram illustrating a tenth exemplary embodiment of a method for direct communication between STAs.

### [Modes of the Invention]

While the present disclosure is susceptible to various modifications and alternative forms, specific embodiments are shown by way of example in the drawings and described in detail. It should be understood, however, that the description is not intended to limit the present disclosure to the specific embodiments, but, on the contrary, the present disclosure is to cover all modifications, equivalents, and alternatives that fall within the spirit and scope of the present disclosure.

Although the terms "first," "second," etc. may be used herein in reference to various elements, such elements should not be construed as limited by these terms. These terms are only used to distinguish one element from another. For example, a first element could be termed a second element, and a second element could be termed a first element, without departing from the scope of the present disclosure. The term "and/or" includes any and all combinations of one or more of the associated listed items.

In exemplary embodiments of the present disclosure, `at least one of A and B' may mean `at least one of A or B' or `at least one of combinations of one or more of A and B'. Also, in exemplary embodiments of the present disclosure, 'one or more of A and B' may mean 'one or more of A or B' or 'one or more of combinations of one or more of A and B'.

It will be understood that when an element is referred to as being "connected" or "coupled" to another element, it can be directly connected or coupled to the other element or intervening elements may be present. In contrast, when an element is referred to as being "directly connected" or "directed coupled" to another element, there are no intervening elements.

The terminology used herein is for the purpose of describing particular embodiments only and is not intended to be limiting of embodiments of the present disclosure. As used herein, the singular forms "a," "an," and "the" are intended to include the plural forms as well, unless the context clearly indicates otherwise. It will be further understood that the terms "comprises," "comprising," "includes," and/or "including," when used herein, specify the presence of stated features, integers, steps, operations, elements, parts, and/or combinations thereof, but do not preclude the presence or addition of one or more other features, integers, steps, operations, elements, parts, and/or combinations thereof.

Unless otherwise defined, all terms (including technical and scientific terms) used herein have the same meaning as commonly understood by those of ordinary skill in the art to which the present disclosure pertains. It will be further understood that terms defined in commonly used dictionaries should be interpreted as having a meaning that is consistent with their meaning in the context of the related art and will not be interpreted in an idealized or overly formal sense unless expressly so defined herein.

Hereinafter, preferred exemplary embodiments of the present disclosure will be described in detail with reference to the accompanying drawings. In describing the present disclosure, to facilitate the entire understanding, like numbers refer to like elements throughout the description of the figures and the repetitive description thereof will be omitted.

In the following, a wireless communication network to which exemplary embodiments according to the present disclosure are applied will be described. The wireless communication network to which the exemplary embodiments according to the present disclosure are applied is not limited to the contents described below, and the exemplary embodiments according to the present disclosure may be applied to various wireless communication networks. A wireless communication system may be referred to as a `wireless communication network'.

In exemplary embodiments, `configuration of an operation (e.g., transmission operation)' may mean 'signaling of configuration information (e.g., information element(s) or parameter(s)) for the operation' and/or 'signaling of information indicating performing of the operation'. `Configuration of information element(s) (e.g., parameter(s))' may mean that the corresponding information element(s) are signaled. `Configuration of a resource (e.g., resource region)' may mean that configuration information of the corresponding resource is signaled.

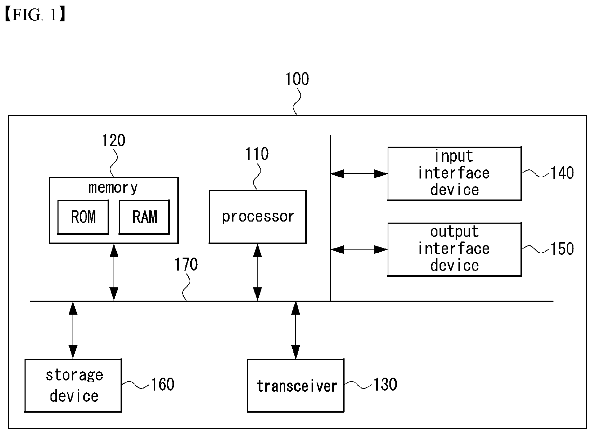

FIG. 1 is a block diagram illustrating a first exemplary embodiment of a communication node constituting a wireless LAN system.

Referring to FIG. 1, a communication node 100 may be an access point, a station, an access point (AP) multi-link device (MLD), or a non-AP MLD. The access point may refer to an AP, and the station may refer to a STA or a non-AP STA. The operating channel width supported by the access point may be 20 megahertz (MHz), 80 MHz, 160 MHz, or the like. The operating channel width supported by the station may be 20MHz, 80MHz, or the like.

The communication node 100 may include at least one processor 110, a memory 120, and a plurality of transceivers 130 connected to a network to perform communications. The transceiver 130 may be referred to as a transceiver, a radio frequency (RF) unit, an RF module, or the like. In addition, the communication node 100 may further include an input interface device 140, an output interface device 150, a storage device 160, and the like. The components included in the communication node 100 may be connected by a bus 170 to communicate with each other.

However, the respective components included in the communication node 100 may be connected through individual interfaces or individual buses centering on the processor 110 instead of the common bus 170. For example, the processor 110 may be connected to at least one of the memory 120, the transceiver 130, the input interface device 140, the output interface device 150, and the storage device 160 through a dedicated interface.

The processor 110 may execute at least one instruction stored in at least one of the memory 120 and the storage device 160. The processor 110 may refer to a central processing unit (CPU), a graphics processing unit (GPU), or a dedicated processor on which the methods according to the exemplary embodiments of the present invention are performed. Each of the memory 120 and the storage device 160 may be configured as at least one of a volatile storage medium and a nonvolatile storage medium. For example, the memory 120 may be configured with at least one of a read only memory (ROM) and a random access memory (RAM).

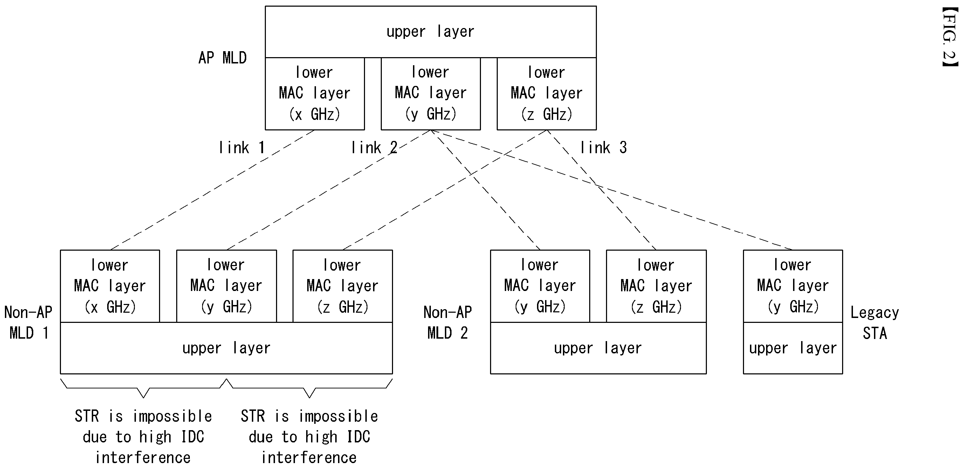

FIG. 2 is a conceptual diagram illustrating a first exemplary embodiment of multi-links configured between MLDs.

Referring to FIG. 2, a MLD may support multi-link operations. The MLD may be classified into an AP MLD and a non-AP MLD (e.g., STA MLD). Through an access procedure and/or a negotiation procedure for a multi-link operation between the AP MLD and the STA MLD, the number of multi-links and links to be used may be configured. The STA MLD may identify information on all bands supported by the AP MLD. In the negotiation procedure for a multi-link operation between the AP MLD and the STA MLD, the STA MLD may configure some or all of the links supported by the AP MLD to be used for the multi-link operation. A station that does not perform a multi-link operation (e.g., IEEE 802.11a/b/g/n/ac/ax station) may be connected to the AP through some links supported by the AP MLD.

The MLD may have one medium access control (MAC) address. In exemplary embodiments, the MLD may mean an AP MLD and/or non-AP MLD (e.g., STA MLD). The MAC address of the MLD may be used in a multi-link setup procedure between the AP MLD and the STA MLD. The MAC address of the AP MLD may be different from the MAC address of the STA MLD. The AP MLD may include an AP operating in each link. That is, the AP may be associated with the AP MLD. The STA MLD may include a STA that operates in each link. That is, the STA may be associated with the STA MLD.

The APs associated with the AP MLD may have different MAC addresses, and the STAs associated with the STA MLD may have different MAC addresses. Each of the APs having different MAC addresses may be in charge of each link among multiple links supported by the AP MLD. The AP associated with the AP MLD may perform a role of an independent AP. Each of the STAs having different MAC addresses may be in charge of each link among multiple links supported by the STA MLD. The STA associated with the STA MLD may perform a role of an independent STA.

The MLD may support a simultaneous transmit and receive (STR) operation. In this case, the MLD may perform a transmission operation in a first link and may perform a reception operation in a second link. The MLD supporting the STR operation may be referred to as a STR MLD (e.g., STR AP MLD, STR non-AP MLD, STR STA MLD). In exemplary embodiments, a link may mean a channel or a band. A MLD that does not support the STR operation may be referred to as a non-STR (NSTR) AP MLD, NSTR non-AP MLD, or NSTR STA MLD.

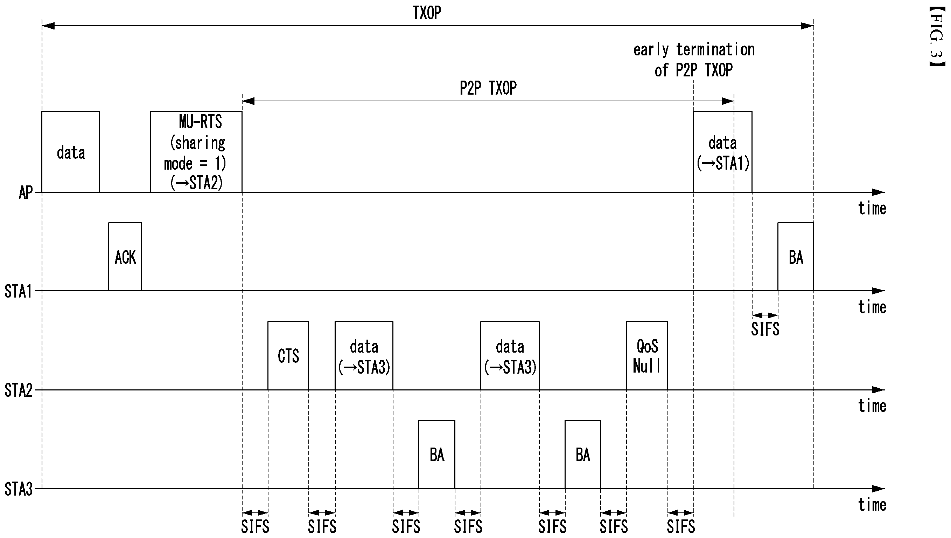

FIG. 3 is a conceptual diagram illustrating a first exemplary embodiment of a method for direct communication between STAs.

Referring to FIG. 3, a communication system may include an AP, STA1, STA2, and STA3. Each of the STA1, STA2, and STA3 may be associated with the AP. Alternatively, the STA3 may not be associated with the AP. The AP may configure a transmission opportunity (TXOP) for data frame transmission with the STA1. The TXOP may be configured by the AP transmitting a data frame to the STA1 and receiving a response frame from the STA1. As another method of configuring the TXOP, the AP may set a receiver of a clear-to-send CTS) frame (e.g., CTS-to-Self frame) to the AP itself, and transmit the CTS frame (e.g., CTS-to-Self frame) to configure the TXOP. A duration field included in a header (e.g., MAC header) of the data frame or CTS-to-Self frame may indicate a time corresponding to a time of the TXOP. The AP may perform a TXOP sharing operation of allocating a part of the TXOP configured with the STA1 to other STAs. The TXOP may be shared for direct communication or peer-to-peer communication between STAs. If the AP shares a TXOP with a STA (e.g., STA1), the STA (e.g., STA1) may perform communication (e.g., direct communication) with another STA during the shared TXOP. The TXOP shared for direct communication or the TXOP configured for direct communication may be referred to as a peer-to-peer (P2P) TXOP. The P2P TXOP may mean a direct communication period and/or a shared communication period.

The AP may allocate (or share) a TXOP (e.g., P2P TXOP) for direct communication within the TXOP configured with the STA1 to the STA2. If a sharing mode in a field included in a multi user-request-to-send (MU-RTS) frame transmitted by the AP to the STA2 is set to 1, it may indicate `sharing of the P2P TXOP', `allocation of the P2P TXOP', or `direct communication in the P2P TXOP'. A duration field included in a MAC header of the MU-RTS frame may be configured as a period for direct communication between STAs (e.g., P2P TXOP or direct communication period). That is, the duration field may indicate the length of the direct communication period (e.g., P2P TXOP).

The direct communication period (e.g., P2P TXOP) may be indicated by another parameter (e.g., another field) in the MU-RTS frame. The direct communication period (e.g., P2P TXOP) may be allocated or shared by another frame (e.g., management frame, control frame, and/or data frame) other than the MU-RTS frame. The another frame may include a sharing mode field indicating allocation or sharing of the direct communication period (e.g., P2P TXOP) and a duration field indicating the length of the direct communication period (e.g., P2P TXOP).

The STA2 may receive the MU-RTS frame indicating direct communication between STAs from the AP, and may transmit a CTS frame in response to the MU-RTS frame. The CTS frame may be transmitted when a result of a channel sensing operation indicates an idle state. In direct communication between STAs, transmission of the CTS frame may be omitted. The direct communication period (e.g., P2P TXOP) may start from an end time of the MU-RTS frame or a start time of the CTS frame. The STA2 may transmit a data frame to another STA (e.g., STA3) after a short inter-frame space (SIFS) from a time of transmitting the CTS frame. The STA3 may receive the data frame from the STA2. If there is no error in the received data frame (e.g., when data frame is successfully decoded), the STA3 may transmit a reception response frame (e.g., acknowledgement (ACK) frame or block ACK (BA) frame) to the STA2 after a SIFS form the a time of receiving the data frame. The above-described data frame transmission/reception procedure may be performed one or more times within the direct communication period (e.g., P2P TXOP) allocated by the MU-RTS frame.

The STA2 may complete the data frame transmission/reception procedure with another STA before the direct communication period (e.g., P2P TXOP) ends. In this case, the direct communication period (e.g., P2P TXOP) may be terminated early. The STA2 may early terminate the direct communication period (e.g., P2P TXOP) by transmitting a quality of service (QoS) Null frame to the AP after a SIFS from a time of receiving a reception response frame for a last data frame. The QoS Null frame may indicate early termination of the direct communication period (e.g., P2P TXOP). A duration field included in a header of the QoS Null frame may be set to 0. A more data field included in the header of the QoS Null frame may be set to 0. The AP may receive the QoS Null frame from the STA2 and may identify the field(s) included in the QoS Null frame. In this case, the AP may determine that the direct communication period (e.g., P2P TXOP) allocated to the STA2 is early terminated based on the information indicated by the QoS Null frame. The AP may perform a data frame transmission/reception procedure without an additional channel access procedure (e.g., backoff procedure) after a SIFS from a time of receiving the QoS Null frame until the TXOP configured with the STA1 ends.

If the STA2 cannot transmit a remaining data frame to another STA (e.g., STA3) within the direct communication period (e.g., P2P TXOP) allocated to the STA2, the STA2 may set a more data field included in a MAC header of the last data frame transmitted to the STA3 within the direct communication period (e.g., P2P TXOP) to 1. Alternatively, if there is a time for transmission of a QoS Null frame after transmission of the last data frame within the direct communication period (e.g., P2P TXOP), the STA2 may transmit the QoS Null frame to the AP. Here, a more data field included in a header (e.g., MAC header) of the QoS Null frame may be set to 1.

The AP may confirm that the more data field included in the MAC header of the last data frame is set to 1 by overhearing frames transmitted and received in the direct communication period (e.g., P2P TXOP). Alternatively, the AP may receive the QoS Null frame from the STA2, and may confirm that the more data field included in the header of the QoS Null frame is set to 1. When it is confirmed that the more data field included in the frame (e.g., data frame and/or QoS Null frame) transmitted by the STA2 is set to 1, the AP may allocate a quiet period to the STA2. The quiet period may be allocated for direct communication between the STAs. Alternatively, the AP may perform the above-described direct communication period (e.g., P2P TXOP) allocation procedure again in order to allocate an additional direct communication period (e.g., additional P2P TXOP) to the STA2.

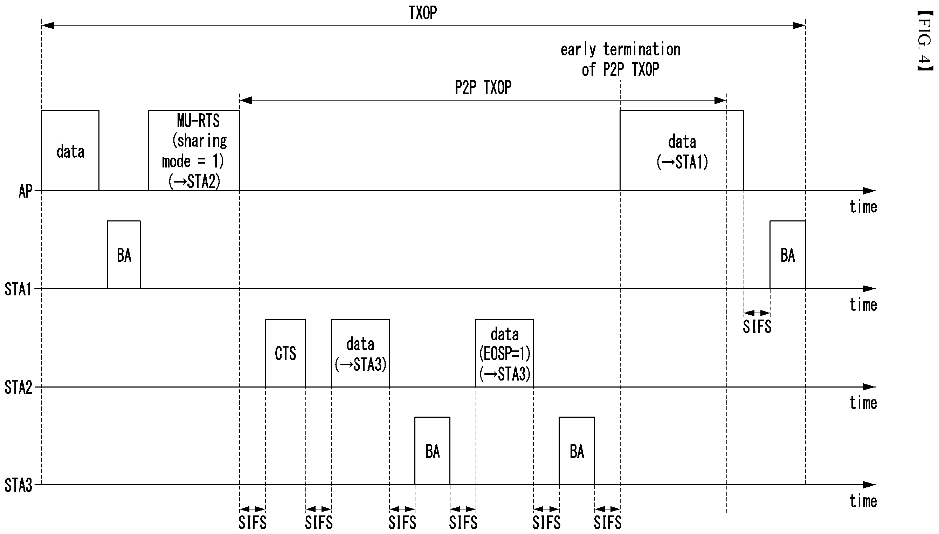

FIG. 4 is a conceptual diagram illustrating a second exemplary embodiment of a method for direct communication between STAs.

Referring to FIG. 4, a communication system may include an AP, STA1, STA2, and STA3. Each of the STA1, STA2, and STA3 may be associated with the AP. Alternatively, the STA3 may not be associated with the AP. Identically or similarly to the exemplary embodiment of FIG. 3, the AP may share or allocate a direct communication period (e.g., P2P TXOP) to the STA2 within a TXOP configured with the STA1. That is, the AP may perform a TXOP sharing operation with the STA2. The STA2 may perform direct communication with the STA3 within the direct communication period (e.g., P2P TXOP) allocated by the AP.

The STA2 may complete a data frame transmission/reception procedure with another STA (e.g., STA3) before the direct communication period (e.g., P2P TXOP) ends. In this case, the direct communication period (e.g., P2P TXOP) may be terminated early. In order to early terminate the direct communication period (e.g., P2P TXOP), the STA2 may set an `end of service period (EOSP)' included in a MAC header of a last data frame transmitted to the STA3 in the direct communication period (e.g., P2P TXOP) to 1. The EOSP set to 1 may indicate termination (e.g., early termination) of the direct communication period (e.g., P2P TXOP). The last data frame may be used to indicate termination of the direct communication period (e.g., P2P TXOP). The EOSP of the last data frame, which is set to 1, may mean that an EOSP field of a previously transmitted data frame is set to 0.

The AP may confirm that the EOSP included in the MAC header of the last data frame is set to 1 by overhearing frames transmitted and received in the direct communication period (e.g., P2P TXOP). That is, the AP may determine that the direct communication period (e.g., P2P TXOP) allocated to the STA2 is early terminated. In this case, the AP may perform a data frame transmission/reception procedure without an additional channel access procedure (e.g., backoff procedure) from an end time of a reception response frame for the last data frame within the direction communication period (e.g., P2P TXOP) allocated to the STA2 until the TXOP configured with the STA1 ends.

Alternatively, the STA2 may early terminate the direct communication period (e.g., P2P TXOP) by setting a more data field to 0 instead of the EOSP included in the data frame. The more data field set to 0 may indicate early termination of the direct communication period (e.g., P2P TXOP). Among data frames transmitted within the direct communication period (e.g., P2P TXOP), only the more data field of the last data frame may be set to 0, and more data fields of the remaining data frames other than the last data frame may be set to 1.

Alternatively, the STA2 may early terminate the direction communication period (e.g., P2P TXOP) by setting a reverse direction grant (RDG)/More physical protocol data unit (PPDU) subfield included in a control and status (CAS) control subfile of a HE variant HT control field included in the data frame to 0. The RDG/More PPDU subfield set to 0 may indicate early termination of the direct communication period (e.g., P2P TXOP). Among data frames transmitted within the direct communication period (e.g., P2P TXOP), only the RDG/More PPDU subfield of the last data frame may be set to 0, and the RDG/More PPDU subfields of the remaining data frames other than the last data frame may be set to 1. The AP may perform a data frame transmission/reception procedure in the remaining period from the early termination time of the direct communication period (e.g., P2P TXOP) until the TXOP ends.

Alternatively, the STA2 may early terminate the direct communication period (e.g., P2P TXOP) allocated by the AP using a value of a duration field included in a MAC header of the data frame. If there is no data frame for direct communication in a transmission queue of the STA2, the STA2 may set a value of a duration field of the MAC header of the data frame transmitted last in the direction communication period (e.g., P2P TXOP) to a time until a time of receiving a reception response frame of the data frame (e.g., the last data frame). The STA2 may transmit the above-described last data frame to the STA3 in the direct communication period (e.g., P2P TXOP). The AP may confirm the value of the duration field included in the MAC header of the last data frame in the direct communication period (e.g., P2P TXOP), and early terminate the direct communication period (e.g., P2P TXOP) based on the confirmed value. The AP may perform a data frame transmission/reception procedure without an additional channel access procedure (e.g., backoff procedure) in the remaining period from the early termination time of the direct communication period (e.g., P2P TXOP) until the TXOP ends.

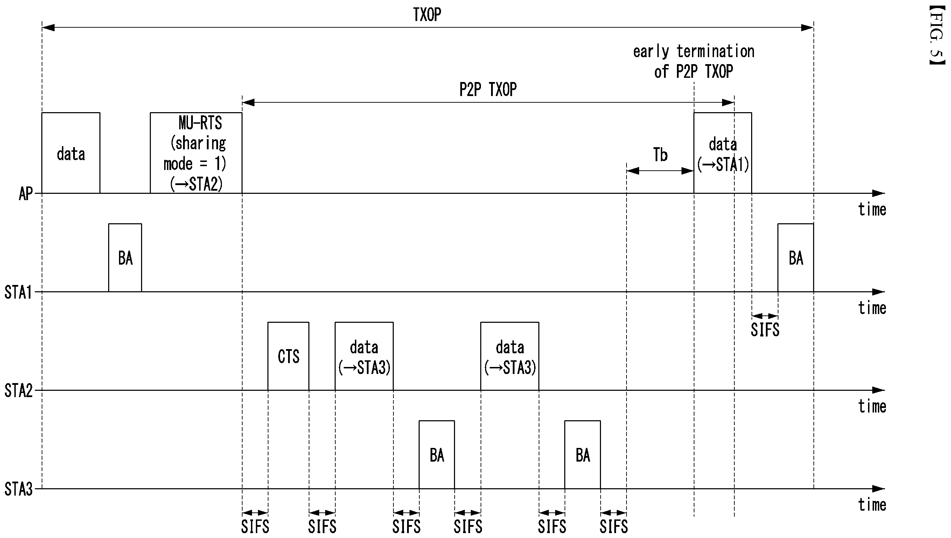

FIG. 5 is a conceptual diagram illustrating a third exemplary embodiment of a method for direct communication between STAs.

Referring to FIG. 5, a communication system may include an AP, STA1, STA2, and STA3. Each of the STA1, STA2, and STA3 may be associated with the AP. Alternatively, the STA3 may not be associated with the AP. Identically or similarly to the exemplary embodiment of FIG. 3, the AP may share or allocate a direct communication period (e.g., P2P TXOP) to the STA2 within a TXOP configured with the STA1. That is, the AP may perform a TXOP sharing operation with the STA2. The STA2 may perform direct communication with the STA3 within the direct communication period (e.g., P2P TXOP) allocated by the AP.

The STA2 may complete a data frame transmission/reception procedure with another STA (e.g., STA3) before the direct communication period (e.g., P2P TXOP) ends. In this case, the direct communication period (e.g., P2P TXOP) may be terminated early. If a frame is not transmitted/received between the STA2 and the STA3 within a preset time Tb from an end time of a reception response frame for a last data frame in the direct communication period (e.g., P2P TXOP), the AP may determine that the direct communication period (e.g., P2P TXOP) allocated to the STA2 is terminated early. That is, when direct communication is not performed within the preset time Tb, the AP may determine that the direct communication period (e.g., P2P TXOP) is terminated early. In this case, the AP may perform a data frame transmission/reception procedure without an additional channel access procedure (e.g., backoff procedure) in a period after the preset time Tb until the TXOP configured with the STA1 ends. The preset time Tb may be a point coordination function (PCF) inter-frame space (PIFS).

The AP may determine the early termination of the direct communication period (e.g., P2P TXOP) in consideration of both the preset time Tb and a value of a more data field included in a data frame transmitted and received in the direct communication period (e.g., P2P TXOP). The STA2 may set the more data field included in the last data frame to 0 in the direct communication period (e.g., P2P TXOP), and may transmit the last data frame to the STA3. The STA2 may receive a reception response frame (e.g., BA frame) for the last data frame from the STA3 in the direct communication period (e.g., P2P TXOP). The AP may overhear the above-described data frame transmission/reception procedure in the direct communication period (e.g., P2P TXOP). When the more data field included in the data frame is set to 0, and a frame is not transmission and receive between the STA2 and the STA3 within the preset time Tb from the end time of the reception response frame for the data frame in the direct communication period (e.g., P2P TXOP), the AP may determine that the direct communication period (e.g., P2P TXOP) allocated to the STA2 is terminated early. After the early termination of the direct communication period (e.g., P2P TXOP), the AP may perform a data frame transmission/reception procedure without an additional channel access procedure (e.g., backoff procedure).

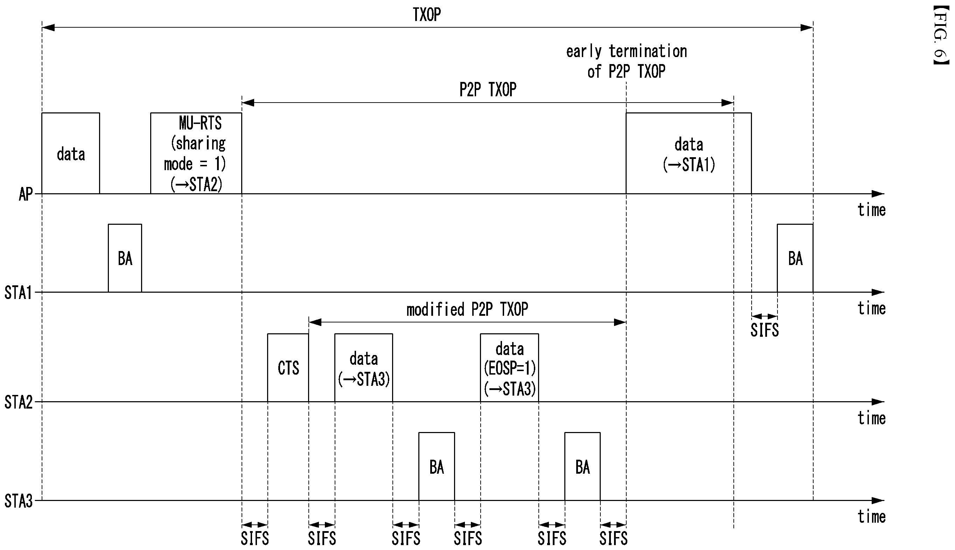

FIG. 6 is a conceptual diagram illustrating a fourth exemplary embodiment of a method for direct communication between STAs.

Referring to FIG. 6, a communication system may include an AP, STA1, STA2, and STA3. Each of the STA1, STA2, and STA3 may be associated with the AP. Alternatively, the STA3 may not be associated with the AP. Identically or similarly to the exemplary embodiment of FIG. 3, the AP may share or allocate a direct communication period (e.g., P2P TXOP) to the STA2 within a TXOP configured with the STA1. That is, the AP may perform a TXOP sharing operation with the STA2. The STA2 may perform direct communication with the STA3 within the direct communication period (e.g., P2P TXOP) allocated by the AP.

The STA2 may receive a MU-RTS frame indicating direct communication between STAs from the AP, and may transmit a CTS frame in response to the MU-RTS frame. If the direct communication period (e.g., P2P TXOP) allocated by the AP is longer than a period required for direct communication between the STA2 and the STA3, the STA2 may adjust the length of the direct communication period (e.g., P2P TXOP). For example, the STA2 may set a value of a duration field included in the CTS frame to a length of the period required for direct communication between the STA2 and the STA3, and transmit the corresponding CTS frame in response to the MU-RTS frame. The CTS frame may indicate early termination of the P2P TXOP or indicate a modified P2P TXOP.

The AP may receive the CTS frame from the STA2, and may identify early termination of the P2P TXOP or the modified P2P TXOP based on the value of the duration field included in the CTS frame. The AP may early terminate the P2P TXOP or adjust the length of the P2P TXOP according to the direct communication period (e.g., P2P TXOP) indicated by the CTS frame. The AP may perform a data frame transmission/reception procedure without an additional channel access procedure (e.g., back off procedure) in a period from the early termination time of the P2P TXOP (e.g., the end time of the modified P2P TXOP), which is indicated by the CTS frame, until the configured TXOP ends.

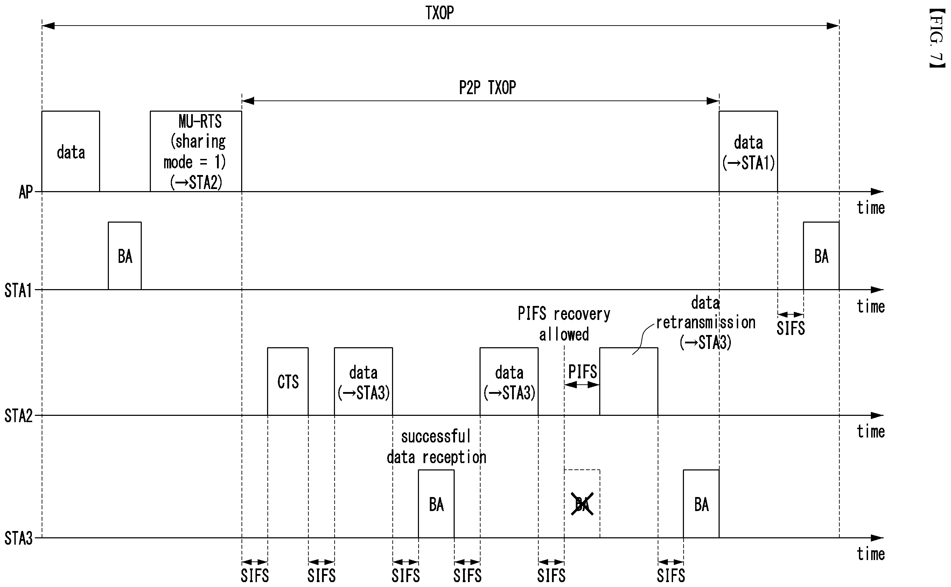

FIG. 7 is a conceptual diagram illustrating a fifth exemplary embodiment of a method for direct communication between STAs.

Referring to FIG. 7, a communication system may include an AP, STA1, STA2, and STA3. Each of the STA1, STA2, and STA3 may be associated with the AP. Alternatively, the STA3 may not be associated with the AP. Identically or similarly to the exemplary embodiment of FIG. 3, the AP may share or allocate a direct communication period (e.g., P2P TXOP) to the STA2 within a TXOP configured with the STA1. That is, the AP may perform a TXOP sharing operation with the STA2. The STA2 may perform direct communication with the STA3 within the direct communication period (e.g., P2P TXOP) allocated by the AP.

The STA2 may transmit a data frame to another STA (e.g., STA3) in the direct communication period (e.g., P2P TXOP). The STA3 may receive the data frame from the STA2. When there is no error in the data frame (e.g., when the data frame is successfully decoded), the STA3 transmits a reception response frame (e.g., BA frame or ACK frame) to the STA2 after a SIFS from a time of receiving the data frame. The above-described data frame transmission/reception procedure may be performed one or more times within the direct communication period (e.g., P2P TXOP) allocated by a MU-RTS frame.

In the direct communication period (e.g., P2P TXOP), a transmission/reception procedure of a first data frame between the STA2 and the STA3 may be successfully performed. "The data frame transmission/reception procedure is successfully performed" may mean "the data frame and the reception response frame for the data frame are successfully transmitted/received". Even when the reception response frame for the data frame indicates negative acknowledgement (NACK), if the reception response frame is successfully transmitted/received, it may be determined that the transmission/reception procedure of the data frame related to the reception response frame is successfully performed. When a frame including a duration field indicating the P2P TXOP is transmitted/received between the STA2 and the STA3 in the direct communication period (e.g., P2P TXOP) allocated by the AP (e.g., a data frame including a duration filed indicating a time within the P2P TXOP is transmitted from the STA2 to the STA3, a response frame for the data frame whose duration filed is set to a time within the P2P TXOP (e.g., P2P TXOP - transmission time of the data frame which is a target of the current reception response frame - SIFS) is transmitted from the STA3 to the STA2, and the STA2 successfully receives the response frame), it may be considered that the STA2 has acquired the P2P TXOP. The STA2 may operate as an owner of the P2P TXOP during the P2P TXOP. That is, the STA2 may perform a PIFS recovery operation during the P2P TXOP.

After completion of the transmission/reception procedure of the first data frame in the direct communication period (e.g., P2P TXOP), a reception response frame for a second data frame may not be received. In this case, the STA2 may determine that transmission of the data frame has failed. If the reception response frame for the second data frame is not received from the STA3 within a PIFS (e.g., SIFS (16us) + slot time (9us) = 25us) from a time of transmitting the second data frame, the STA2 may retransmit the data frame after a PIFS elapses. The retransmitting of the data frame after a PIFS elapses may be referred to as a PIFS recovery operation. The PIFS recovery operation may be performed a preset number of times. The AP may set the preset number of times to the STA(s). The STA2 may successfully receive a reception response frame for the retransmitted data frame from the STA3 according to the PIFS recovery operation. In this case, if a time required for transmission and reception of a data frame remains until the direct communication period (e.g., P2P TXOP) ends, the STA2 may transmit a next data frame after a SIFS from the time of receiving the reception response frame.

If the PIFS recovery operation is performed a preset number of times (e.g., 3 times), the STA2 may early terminate the direct communication period (e.g., P2P TXOP) even when a time for transmission and reception of a frame remains in the direct communication period (e.g., P2P TXOP). In order to early terminate the direct communication period (e.g., P2P TXOP), the STA2 may transmit a QoS Null frame to the AP after a preset time (e.g., PIFS) from a time of transmitting the last data frame according to the PIFS recovery operation. That is, the QoS Null frame may indicate early termination of the direct communication period (e.g., P2P TXOP). A value of a duration field included in a header of the QoS Null frame may be set to 0, and a more data field or an RDG/More PPDU subfield included in the header of the QoS Null frame may be set to 0. The AP may receive the QoS Null frame from the STA2, and may determine that the direct communication period (e.g., P2P TXOP) is terminated early based on the value of the field(s) included in the QoS Null frame. Accordingly, the AP may perform a data frame transmission/reception procedure without an additional channel access procedure (e.g., backoff procedure) after a SIFS from a time of receiving the QoS Null frame until the TXOP configured with the STA1 ends.

Alternatively, the early termination of the direct communication period (e.g., P2P TXOP) may be determined based on the number of times the PIFS recovery operation for the same data (e.g., the same data frame) is performed. For example, the AP may check the number of times the PIFS recovery operation is performed for the same data, and when the PIFS recovery operation is performed a preset number of times, the direct communication period (e.g., P2P TXOP) may be terminated early. After a preset time (e.g., PIFS) elapses from the time of transmitting the last data frame based on the PIFS recovery operation, the AP may early terminate the direct communication period (e.g., P2P TXOP), and may perform a data frame transmission/reception procedure in a period from the early termination time of the direct communication period (e.g., P2P TXOP) until the TXOP configured with the STA1 ends. The STA2 may set an EOSP included in a MAC header of the last data frame transmitted according to the PIFS recovery operation to 1 or set an RDG/More PPDU subfield included therein to 0, and may transmit the last data frame to the STA3. `EOSP=1' or 'RDG/More PPDU subfield=0' included in the last data frame may indicate the last transmission according to the PIFS recovery operation.

As another method, the early termination of the direct communication period (e.g., P2P TXOP) may be determined based on a value of a duration field included in the MAC header of the last data frame. The STA2 may set the value of the duration field included in the MAC header of the last data frame transmitted according to the PIFS recovery operation to a time required for reception of a reception response frame for the last data frame, and transmit the last data frame to the STA3. The data frame including the duration field set to the above-described value may indicate that the direct communication period (e.g., P2P TXOP) is terminated.

The AP may acquire the data frame (e.g., the last data frame) according to the PIFS recovery operation, and when a reception response frame for the corresponding data frame is not received within a PIFS from the time of receiving the corresponding data frame, the AP may determine that the direct communication period (e.g., P2P TXOP) is terminated early. In this case, the AP may perform a data frame transmission/reception procedure without an additional channel access procedure (e.g., backoff procedure) in a period from the early termination time of the direct communication period (e.g., P2P TXOP) until the TXOP configured with the STA1 ends.

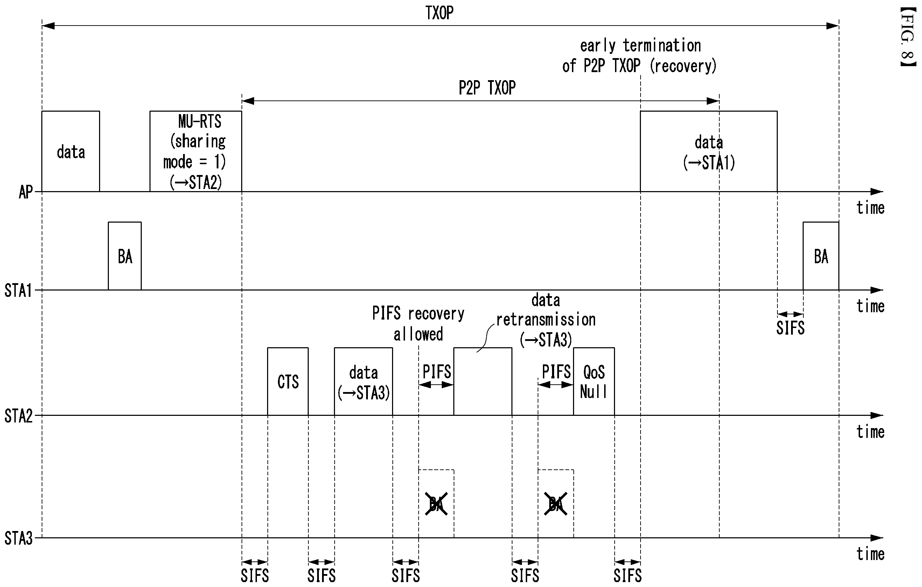

FIG. 8 is a conceptual diagram illustrating a sixth exemplary embodiment of a method for direct communication between STAs.

Referring to FIG. 8, a communication system may include an AP, STA1, STA2, and STA3. Each of the STA1, STA2, and STA3 may be associated with the AP. Alternatively, the STA3 may not be associated with the AP. Identically or similarly to the exemplary embodiment of FIG. 3, the AP may share or allocate a direct communication period (e.g., P2P TXOP) to the STA2 within a TXOP configured with the STA1. That is, the AP may perform a TXOP sharing operation with the STA2. The STA2 may perform direct communication with the STA3 within the direct communication period (e.g., P2P TXOP) allocated by the AP.

The STA2 may transmit a data frame to another STA (e.g., STA3) in the direct communication period (e.g., P2P TXOP). When a transmission failure of the data frame occurs in the direct communication period (e.g., P2P TXOP) (e.g., when a reception response frame for the data frame is not received after a SIFS from a time of transmitting the data frame), an error recovery operation may be performed. For the error recovery operation, if the STA2 fails to receive a reception response frame for the data frame within a PIFS (e.g., SIFS + PIFS) from the time of transmitting the data frame, the STA2 may retransmit the corresponding data frame. The above-described operation may be a PIFS recovery operation.

Unlike the exemplary embodiment of FIG. 7, in the exemplary embodiment of FIG. 8, the STA2 may perform a PIFS recovery operation from transmission of a first data frame in the direct communication period (e.g., P2P TXOP). That is, success of the transmission/reception procedure of the first data frame in the direct communication period (e.g., P2P TXOP) may not be necessary as a condition for performing the PIFS recovery operation. The direct communication period (e.g., P2P TXOP) allocated by the AP may be regarded as a P2P TXOP acquired by the STA2. The STA2 may operate as an owner of the P2P TXOP during the P2P TXOP. That is, the STA2 may perform the PIFS recovery operation during the P2P TXOP. When the PIFS recovery operation fails, the direct communication period (e.g., P2P TXOP) may be terminated. The method of terminating the direct communication period (e.g., P2P TXOP) may be the same as or similar to the method of terminating the direct communication period (e.g., P2P TXOP) in the exemplary embodiment of FIG. 7.

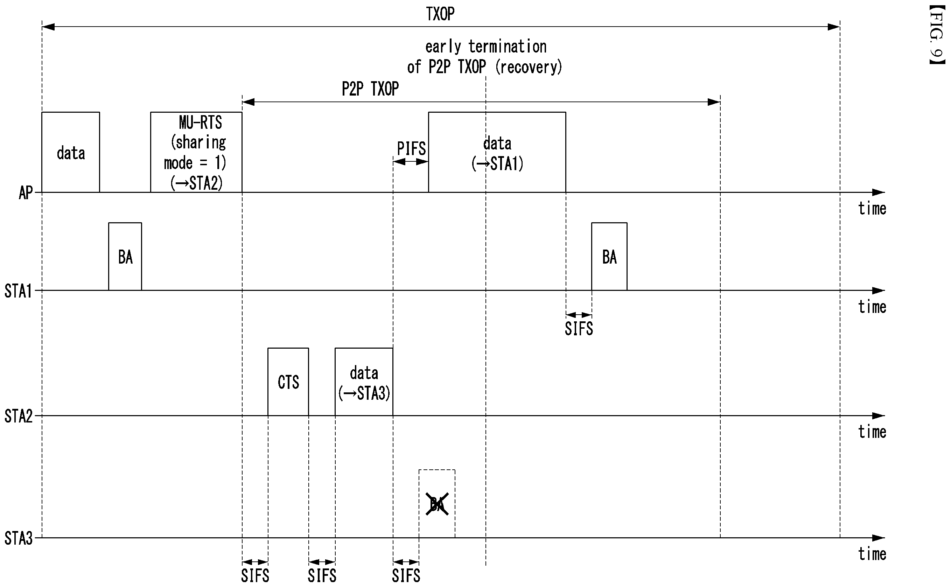

FIG. 9 is a conceptual diagram illustrating a seventh exemplary embodiment of a method for direct communication between STAs.

Referring to FIG. 9, a communication system may include an AP, STA1, STA2, and STA3. Each of the STA1, STA2, and STA3 may be associated with the AP. Alternatively, the STA3 may not be associated with the AP. Identically or similarly to the exemplary embodiment of FIG. 3, the AP may share or allocate a direct communication period (e.g., P2P TXOP) to the STA2 within a TXOP configured with the STA1. That is, the AP may perform a TXOP sharing operation with the STA2. The STA2 may perform direct communication with the STA3 within the direct communication period (e.g., P2P TXOP) allocated by the AP.

The STA2 may transmit a data frame to another STA (e.g., STA3) in the direct communication period (e.g., P2P TXOP). Even when a transmission failure of the data frame occurs in the direct communication period (e.g., P2P TXOP) (e.g., when a reception response frame for the data frame is not received after a SIFS from a time of transmitting the data frame), since the STA2 is not an owner of the TXOP, the STA2 may not transmit a data frame (e.g., a retransmission frame and/or an additional data frame).

The STA3 may be a STA (i.e., associated STA) associated with the AP that has allocated the direct communication period to the STA2 using a MU-RTS frame. Accordingly, the AP may receive a frame transmitted by the STA3. If a reception response frame for a data frame is not received from the STA3 within a PIFS from a time of transmitting the data frame of the STA2, the AP may early terminate the direct communication period (e.g., P2P TXOP), and may perform a data frame transmission/reception procedure without an additional channel access procedure (e.g., backoff procedure) in a period from the early termination time of the direct communication period until the TXOP configured with the STA1 ends.

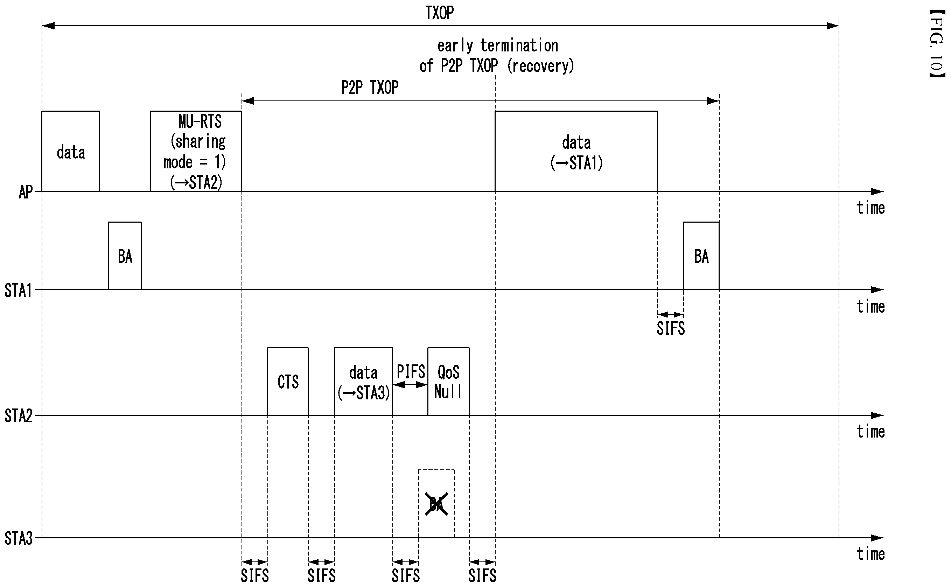

FIG. 10 is a conceptual diagram illustrating an eighth exemplary embodiment of a method for direct communication between STAs.

Referring to FIG. 10, a communication system may include an AP, STA1, STA2, and STA3. Each of the STA1, STA2, and STA3 may be associated with the AP. Alternatively, the STA3 may not be associated with the AP. Identically or similarly to the exemplary embodiment of FIG. 3, the AP may share or allocate a direct communication period (e.g., P2P TXOP) to the STA2 within a TXOP configured with the STA1. That is, the AP may perform a TXOP sharing operation with the STA2. The STA2 may perform direct communication with the STA3 within the direct communication period (e.g., P2P TXOP) allocated by the AP.

The STA2 may transmit a data frame to another STA (e.g., STA3) in the direct communication period (e.g., P2P TXOP). Even when a transmission failure of the data frame occurs in the direct communication period (e.g., P2P TXOP) (e.g., when a reception response frame for the data frame is not received after a SIFS from a time of transmitting the data frame), since the STA2 is not an owner of the TXOP, the STA2 may not transmit a data frame (e.g., a retransmission frame and/or an additional data frame).

The STA3 may be a STA (i.e., unassociated STA) not associated with the AP that has allocated the direct communication period to the STA2 using a MU-RTS frame. Accordingly, the AP may not receive a frame transmitted by the STA3. Whether a reception response frame transmitted by the STA3 is received may be identified only by the STA2. The STA2 may not receive a reception response frame for a frame from the STA3 within a PIFS from a time of transmitting the data frame. In this case, in order to inform that the reception response frame for the data frame is not received from the STA3, the STA2 may transmit a QoS Null frame to the AP. The AP may receive the QoS Null frame from the STA2, and may identify that the STA2 did not receive the reception response frame for the data frame from the STA3 based on the QoS Null frame. The STA2 may set parameters included in the QoS Null frame (e.g., EOSP=1, More Data=0, or RDG/More PPDU subfield=0), and transmit the QoS Null frame to the AP to inform that the STA2 failed to receive the reception response frame for the data frame from the STA3 (i.e., early termination of the P2P TXOP). In this case, the AP may early terminate the direct communication period (e.g., P2P TXOP), and may perform a data frame transmission/reception procedure without an additional channel access procedure (e.g., backoff procedure) in a period from the early termination time of the direct communication period (e.g., P2P TXOP) until the TXOP configured with the STA1 ends.

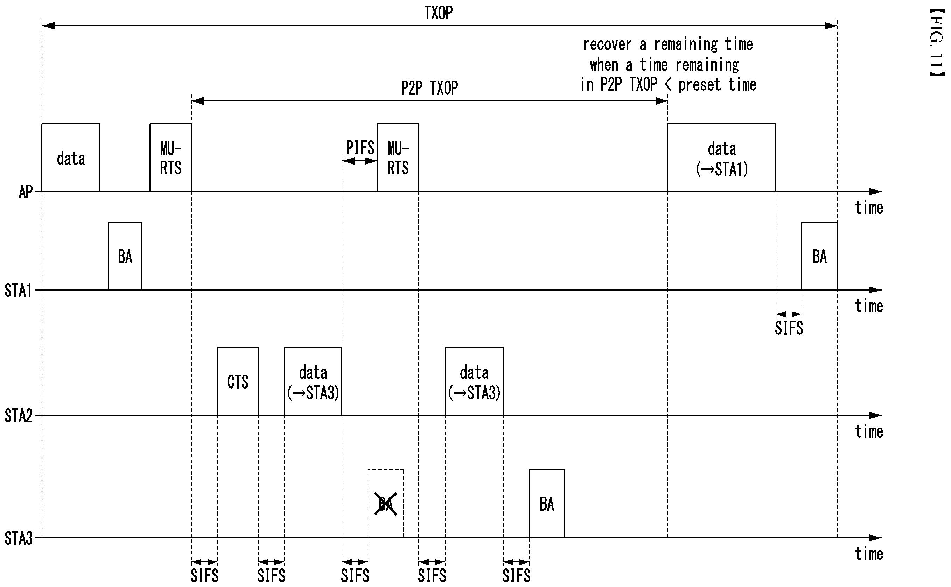

FIG. 11 is a conceptual diagram illustrating a ninth exemplary embodiment of a method for direct communication between STAs.

Referring to FIG. 11, a communication system may include an AP, STA1, STA2, and STA3. Each of the STA1, STA2, and STA3 may be associated with the AP. Alternatively, the STA3 may not be associated with the AP. Identically or similarly to the exemplary embodiment of FIG. 3, the AP may share or allocate a direct communication period (e.g., P2P TXOP) to the STA2 within a TXOP configured with the STA1. That is, the AP may perform a TXOP sharing operation with the STA2. The STA2 may perform direct communication with the STA3 within the direct communication period (e.g., P2P TXOP) allocated by the AP.

The STA2 may transmit a data frame to another STA (e.g., STA3) in the direct communication period (e.g., P2P TXOP). Even when a transmission failure of the data frame occurs in the direct communication period (e.g., P2P TXOP) (e.g., when a reception response frame for the data frame is not received after a SIFS from a time of transmitting the data frame), since the STA2 is not an owner of the TXOP, the STA2 may not transmit a data frame (e.g., a retransmission frame and/or an additional data frame).

The STA3 may be a STA (i.e., associated STA) associated with the AP that has allocated the direct communication period to the STA2 using a MU-RTS frame. Accordingly, the AP may receive a frame transmitted by the STA3. If a reception response frame for the data frame is not received from the STA3 within a PIFS from the time of transmitting the data frame of the STA2, the AP may transmit a MU-RTS frame to re-allocate a direct communication period (e.g., P2P TXOP) to the STA2. Parameter(s) included in the MU-RTS frame for re-allocation of a direct communication period (e.g., P2P TXOP) may be the same as parameter(s) included in the MU-RTS frame for the initial allocation of the direct communication period (e.g., P2P TXOP). Alternatively, the parameter(s) included in the MU-RTS frame for re-allocation of a direct communication period (e.g., P2P TXOP) may be configured to indicate the remaining period. That is, the parameter(s) included in the MU-RTS frame for re-allocation of the direct communication period (e.g., P2P TXOP) may be different from the parameter(s) included in the MU-RTS frame for the initial allocation of the direct communication period (e.g., P2P TXOP).

The STA2 may receive the MU-RTS frame for re-allocating a direct communication period (e.g., P2P TXOP) from the AP, and may identify the direct communication period (e.g., P2P TXOP) re-allocated based on the parameter(s) included in the MU-RTS frame. The STA2 may transmit the data frame to the STA3 again after a SIFS from a time of receiving the MU-RTS frame. Alternatively, the STA2 may transmit a CTS frame to the AP after a SIFS from the time of receiving the MU-RTS frame, and may transmit the data frame to the STA3 after a SIFS from the time of transmitting the CTS frame. Since the STA2 is not an owner of the TXOP within the direct communication period (e.g., P2P TXOP), the STA2 may perform communication in the direction communication period (e.g., P2P TXOP) when the AP, the owner of the TXOP, allocates the direct communication period (e.g., P2P TXOP) to the STA2.

A time remaining after completion of the procedure for transmitting and receiving the last data frame between the STA2 and the STA3 in the direct communication period (e.g., P2P TXOP) is shorter than a preset time (e.g., SIFS, PIFS, or `minimum length of PPDU + SIFS'), the AP may terminate the direct communication period (e.g., P2P TXOP) and may recover the remaining time. The AP may terminate the direction communication period (e.g., P2P TXOP) after the transmission/reception procedure of the last data frame ends (e.g., after reception of a reception response frame for the last data frame), after a SIFS from the end time of the transmission/reception procedure of the last data frame, or after an PIFS from the end time of the transmission/reception procedure of the last data frame. The AP may terminate the direct communication period (e.g., P2P TXOP), and may perform a data frame transmission/reception procedure with an additional channel access procedure (e.g., backoff procedure) in a period from the end time of the direct communication period (e.g., P2P TXOP) until the TXOP configured with the STA1 ends.

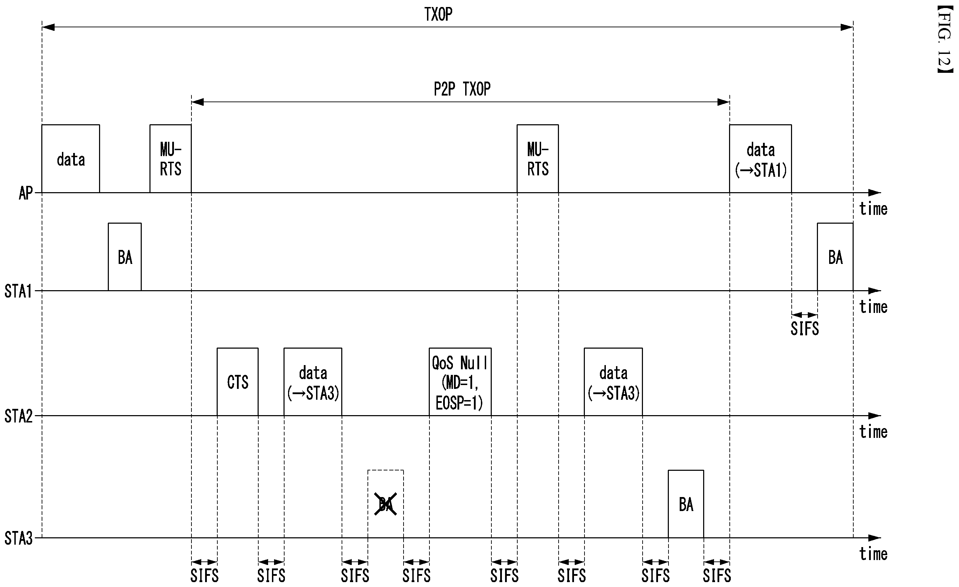

FIG. 12 is a conceptual diagram illustrating a tenth exemplary embodiment of a method for direct communication between STAs.

Referring to FIG. 12, a communication system may include an AP, STA1, STA2, and STA3. Each of the STA1, STA2, and STA3 may be associated with the AP. Alternatively, the STA3 may not be associated with the AP. Identically or similarly to the exemplary embodiment of FIG. 3, the AP may share or allocate a direct communication period (e.g., P2P TXOP) to the STA2 within a TXOP configured with the STA1. That is, the AP may perform a TXOP sharing operation with the STA2. The STA2 may perform direct communication with the STA3 within the direct communication period (e.g., P2P TXOP) allocated by the AP.

The STA2 may transmit a data frame to another STA (e.g., STA3) in the direct communication period (e.g., P2P TXOP). Even when a transmission failure of the data frame occurs in the direct communication period (e.g., P2P TXOP) (e.g., when a reception response frame for the data frame is not received after a SIFS from a time of transmitting the data frame), since the STA2 is not an owner of the TXOP, the STA2 may not transmit a new data frame (e.g., a retransmission frame and/or an additional data frame).

The STA3 may be a STA (i.e., unassociated STA) not associated with the AP that has allocated the direct communication period to the STA2 using a MU-RTS frame. Accordingly, the AP may not receive a frame transmitted by the STA3. Whether a reception response frame transmitted by the STA3 is received may be identified only by the STA2. The STA2 may not be able to receive the reception response frame for the corresponding data frame from the STA3 within a PIFS from the time of transmitting the data frame. In this case, in order to inform that the reception response frame for the data frame has not been received from the STA3, the STA2 may transmit a QoS Null frame to the AP. That is, a receiver address of the QoS Null frame may indicate the AP. A more data (MD) field and/or an RDG/More PPDU subfield included in the QoS Null frame may be set to 1, and an EOSP included in the QoS Null frame may be set to 1. `EOSP = 1' included in the QoS Null frame may indicate termination, and `more data field = 1' included in the QoS Null frame may indicate that there is a data frame to be additionally transmitted.

The AP may receive the QoS Null frame from the STA2, and may identify `EOSP = 1 and more data field = 1' or `RDG/More PPDU subfield = 1' included in the QoS Null frame. That is, when it is identified that an additional data frame exists in the STA2, the AP may transmit a MU-RTS frame to the STA2 after a SIFS or PIFS from the time of receiving the QoS Null frame to re-allocate a direct communication period (e.g., P2P TXOP). Parameter(s) included in the MU-RTS frame for re-allocation of a direct communication period (e.g., P2P TXOP) may be the same as the parameter(s) included in the MU-RTS frame for the initial allocation of the direct communication period (e.g., P2P TXOP). Alternatively, the parameter(s) included in the MU-RTS frame for reallocation of the direct communication period (e.g., P2P TXOP) may be set to indicate the remaining period. That is, the parameter(s) included in the MU-RTS frame for re-allocation of the direct communication period (e.g., P2P TXOP) may be different from the parameter(s) included in the MU-RTS frame for the initial allocation of the direct communication period (e.g., P2P TXOP).

The STA2 may receive the MU-RTS frame for re-allocating the direct communication period (e.g., P2P TXOP) from the AP, and may identify the direct communication period (e.g., P2P TXOP) based on the parameter(s) included in the MU-RTS frame. The STA2 may transmit the data frame to the STA3 again after a SIFS from the time of receiving the MU-RTS frame. Alternatively, the STA2 may transmit a CTS frame to the AP after a SIFS from the time of receiving the MU-RTS frame, and may transmit the data frame to the STA3 after a SIFS from the time of transmitting the CTS frame. Since the STA2 is not an owner of the TXOP within the direct communication period (e.g., P2P TXOP), the STA2 may perform communication in the direct communication period (e.g., P2P TXOP) when the AP, the owner of the TXOP, allocates the direct communication period (e.g., P2P TXOP) to the STA2.

The exemplary embodiments of the present disclosure may be implemented as program instructions executable by a variety of computers and recorded on a computer readable medium. The computer readable medium may include a program instruction, a data file, a data structure, or a combination thereof. The program instructions recorded on the computer readable medium may be designed and configured specifically for the present disclosure or can be publicly known and available to those who are skilled in the field of computer software.

Examples of the computer readable medium may include a hardware device such as ROM, RAM, and flash memory, which are specifically configured to store and execute the program instructions. Examples of the program instructions include machine codes made by, for example, a compiler, as well as high-level language codes executable by a computer, using an interpreter. The above exemplary hardware device can be configured to operate as at least one software module in order to perform the embodiments of the present disclosure, and vice versa.

While the embodiments of the present disclosure and their advantages have been described in detail, it should be understood that various changes, substitutions and alterations may be made herein without departing from the scope of the present disclosure.

## Claims

1. A method of a first station (STA), comprising:
receiving, from an access point (AP), a first frame for allocating a shared communication period;
identifying the shared communication period based on one or more fields included in the first frame; and
performing data transmission/reception without a channel contention procedure in the shared communication period,
wherein the shared communication period is configured within a transmission opportunity (TXOP) configured by the AP.

2. The method according to claim 1, wherein the first frame includes a first field indicating that the shared communication period is allocated and a second field indicating a length of the shared communication period.

3. The method according to claim 1, further comprising transmitting, to the AP, a second frame that is a response to the first frame, wherein the first frame is a multi-user-request-to-send (MU-RTS) frame, and the second frame is a clear-to-send (CTS) frame.

4. The method according to claim 1, further comprising, when the first STA needs to terminate shared communication in the shared communication period before the shared communication period allocated by the AP ends, transmitting a third frame including information indicating termination of the shared communication period.

5. The method according to claim 4, wherein the information indicating termination of the shared communication period is at least one of an RDG/More PPDU subfield set to 0 or a more data field set to 0 included in a medium access control (MAC) header of the third frame.

6. The method according to claim 4, wherein the third frame is a quality of service (QoS) Null frame transmitted to the AP or a last data frame transmitted by the first STA in the shared communication period.

7. The method according to claim 1, wherein the performing of the data transmission/reception comprises:
transmitting a data frame; and
when a reception response frame for the data frame is not received within a preset time, transmitting a third frame including information indicating termination of the shared communication period.

8. The method according to claim 1, wherein the performing of the data transmission/reception comprises:
transmitting a data frame; and
when a reception response frame for the data frame is not received within a preset time, retransmitting the data frame.

9. A method of an access point (AP), comprising:
performing communication with a first station (STA) within a transmission opportunity (TXOP);
configuring a shared communication period within the TXOP; and
transmitting a first frame for allocating the shared communication period to a second STA,
wherein shared communication between the second STA and a third STA is performed in the shared communication period.

10. The method according to claim 9, wherein the first frame includes a first field indicating that the shared communication period is allocated and a second field indicating a length of the shared communication period.

11. The method according to claim 9, further comprising receiving, from the second STA, a second frame that is a response to the first frame, wherein the first frame is a multi-user-request-to-send (MU-RTS) frame, and the second frame is a clear-to-send (CTS) frame.

12. The method according to claim 9, further comprising:
obtaining, from the second STA, a third frame including information indicating termination of the shared communication period; and
after termination of the shared communication period, performing communication with the first STA in the TXOP.

13. The method according to claim 12, wherein the information indicating termination of the shared communication period is at least one of an RDG/More PPDU subfield set to 0 or a more data field set to 0 included in a medium access control (MAC) header of the third frame.

14. The method according to claim 12, wherein the third frame is a quality of service (QoS) Null frame transmitted to the AP or a last data frame transmitted by the second STA in the shared communication period.

15. The method according to claim 9, further comprising:
identifying a data frame transmitted by the second STA to the third STA in the shared communication period;
identifying transmission of a reception response frame for the data frame in the shared communication period; and
when the shared communication is not performed between the second STA and the third STA within a preset time after the transmission of the reception response frame, determining that the shared communication period is terminated.

16. The method according to claim 9, further comprising:
identifying a data frame transmitted by the second STA to the third STA in the shared communication period; and
when a reception response frame for the data frame is not identified within a preset time in the shared communication period, determining that the shared communication period is terminated.

17. A first station (STA) comprising:
a processor;
a memory electronically communicating with the processor; and
one or more instructions stored in the memory,
wherein the one or more instructions cause the first STA to:
receive, from an access point (AP), a first frame for allocating a shared communication period;
identify the shared communication period based on one or more fields included in the first frame; and
perform data transmission/reception without a channel contention procedure in the shared communication period,
wherein the shared communication period is configured within a transmission opportunity (TXOP) configured by the AP.

18. The first STA according to claim 17, wherein the one or more instructions cause the first STA to transmit, to the AP, a second frame that is a response to the first frame, wherein the first frame is a multi-user-request-to-send (MU-RTS) frame, the second frame is a clear-to-send (CTS) frame, and the MU-RTS frame includes a first field indicating that the shared communication period is allocated and a second field indicating a length of the shared communication period.

19. The first STA according to claim 17, wherein the one or more instructions cause the first STA to: when the first STA needs to terminate shared communication in the shared communication period before the shared communication period allocated by the AP ends, transmit a third frame including information indicating termination of the shared communication period, wherein the third frame is a quality of service (QoS) Null frame transmitted to the AP or a last data frame transmitted by the first STA in the shared communication period.

20. The first STA according to claim 17, wherein the one or more instructions cause the first STA to:
transmit a data frame; and
when a reception response frame for the data frame is not received within a preset time, transmit a third frame including information indicating termination of the shared communication period.
